# EUROPÄISCHE PATENTSCHRIFT

(11) **EP 1 029 484 B1**
(45) Veröffentlichungstag und Bekanntmachung des Hinweises auf die Patenterteilung: **30.07.2003**
(21) Anmeldenummer: 00102726.7
(22) Anmeldetag: 10.02.2000
(51) Int. Cl.: A47J 31/06, A47J 31/20

(54) **Vorrichtung zum Einkapseln von Aromafeststoffen**
Device for encapsulating aromatic products
Dispositif pour l'encapsulation de produits aromatiques

(30) Priorität: 19.02.1999 DE 29902992 U
(43) Veröffentlichungstag der Anmeldung: 23.08.2000
(73) Patentinhaber: Riensch & Held (GmbH & Co.), 21035 Hamburg (DE)
(72) Erfinder: Justus, Christian, 20148 Hamburg (DE)
(74) Vertreter: Eisenführ, Speiser & Partner

(56) Entgegenhaltungen:
- DE-A- 3 438 539
- DE-A- 19 637 899
- GB-A- 2 249 021
- US-A- 5 461 968

## Beschreibung

Die Erfindung betrifft eine Vorrichtung zum Einkapseln von in eine Flüssigkeit, insbesondere Wasser, gegebenen Aromafeststoffen, insbesondere Teegut oder Kaffee, wie aus dem Dokument DE 196 37 899 bekannt.

Solche Vorrichtungen waren bislang insbesondere als Filtereinsätze ausgebildet und in der Regel wiederverwendbar. Bei bekannten Filtereinsätzen dieser Art besteht allerdings der Nachteil, daß der Filtereinsatz nach Ablauf der Ziehzeit aus dem Behälter entnommen werden muß. Wird nämlich nämlich die Ziehzeit überschritten, so kann der Geschmack des Getränkes durch übermäßige Abgabe von aromatischen Stoffen, beispielsweise sogenannten Bitterstoffen, aus dem im Filtereinsatz befindlichen Filterschlamm, beispielsweise Teegut, unerwünscht negativ beeinflußt werden. Die Zubereitung des Getränkes kann also nur durch die Entnahme des Filtereinsatzes aus dem Behälter entsprechend beendet werden.

Der Bedienungskomfort eines wiederverwendbaren Filtereinsatzes der eingangs genannten Art würde steigen, könnte er nach Ablauf der Ziehzeit im Behälter verbleiben. Daher liegt der Erfindung die Aufgabe zugrunde, einen Filtereinsatz der eingangs genannten Art derart zu verbessern, daß der Kontakt des im Filtergehäuse befindlichen Filterschlammes mit der Flüssigkeit im Behälter durch Eingreifen des Benutzers gezielt beendet werden kann, ohne daß der Filtereinsatz entnommen werden muß.

Diese Aufgabe wird erfindungsgemäß dadurch gelöst, daß ein zwischen einer Anfangs- und einer Endstellung beweglich gelagerten Schieber vorgesehen ist, der in seiner Endstellung einen die Aromafeststoffe aufnehmenden Raum begrenzt und als um eine im wesentlichen vertikale Drehachse drehbar gelagerter flügelförmiger Drehschieber ausgebildet ist.

Die erfindungsgemäße Vorrichtung erlaubt eine gezielte Beendigung des Ziehprozesses der Aromafeststoffe durch Eingreifen des Benutzers, indem dieser den Drehschieber von seiner Anfangsstellung in seine Endstellung verdreht. Hierzu werden zunächst die Aromafeststoffe, beispielsweise Teegut, in die Flüssigkeit gegeben, so daß sie mit der Flüssigkeit in Kontakt gelangen und entsprechende Aromastoffe an diese abgeben. Dabei befindet sich der Drehschieber in seiner Anfangsstellung. Nach Ablauf der Ziehzeit wird der erfindungsgemäße Drehschieber gedreht, wodurch er von seiner Anfangsstellung in seine Endstellung verbracht wird und dabei die Aromafeststoffe in einen Raum mitnimmt, der vom Drehschieber in seiner Endstellung begrenzt wird. Wenn die Aromafeststoffe durch Rotation des Drehschiebers vollständig in jenen Raum vollbracht worden sind, besteht kein Kontakt mehr zu der umgebenden Flüssigkeit, wodurch der Ziehprozess der Aromafeststoffe in der Flüssigkeit gezielt beendet wird. Da der Drehschieber in seiner Endstellung den nun die Aromafeststoffe aufnehmenden Raum begrenzt, wird verhindert, daß die Aromafeststoffe auf unerwünschte Weise jenen Raum wieder verlassen und mit der jenen Raum umgebenen Flüssigkeit wieder in Kontakt treten können. Somit brauchen die Aromafeststoffe auch nach Beendigung des Ziehprozesses nicht unbedingt sofort aus der Flüssigkeit entnommen zu werden.

Der Vorteil der erfindungsgemäßen Vorrichtung besteht zunächst darin, daß der Benutzer den Ziehprozess gezielt beenden kann, ohne die Aromafeststoffe sofort aus der Flüssigkeit entnehmen zu müssen, wodurch der Bedienungskomfort eine deutliche Steigerung erfährt. Die erfindungsgemäße drehbare Lagerung des Schiebers erlaubt dabei eine einfache und sichere Bedienung, wodurch sich insbesondere die Entstehung eines unerwünschten Kippmomentes vermeiden lässt, welches bei herkömmlichen Kaffeepressen mit vertikal beweglichem Schieber zu einem Umkippen und somit zu einer Beschädigung des die Flüssigkeit aufnehmenden Gebindes führen konnte. Außerdem wird mit Hilfe der erfindungsgemäßen Konstruktion im Gegensatz zu herkömmlichen Filtereinsätzen ohne Perforationen im unteren Abschnitt und/oder Bodenbereich auch bei geringen Füllmengen die volle Filterfunktion der Vorrichtung beibehalten. Schließlich führt die Erfindung zu einer einfachen Konstruktion, was sich auch positiv auf die Herstellungskosten auswirkt; beispielsweise kann die gesamte Vorrichtung mit allen ihren feststehenden und beweglichen Teilen aus Kunststoff hergestellt werden.

Zweckmäßigerweise ist ein Gehäuse vorgesehen.

Bei einer bevorzugten Ausführung ist die Vorrichtung zum Einsatz in einen Behälter, insbesondere einer Teekanne, welche ein, insbesondere als Rotationskörper ausgebildetes, Gehäuse aufweist, vorgesehen, wobei in diesem Fall das Gehäuse der Vorrichtung vom Gehäuse des Behälters gebildet wird. Dies ergibt eine besonders einfache und somit kostengünstige Konstruktion. Da im Betrieb der Drehschieber in die Flüssigkeit eingetaucht ist, sollte der Drehschieber zweckmäßigerweise einen flüssigkeitsdurchlässigen Abschnitt aufweisen, der dafür sorgt, daß die Verdrängung der Flüssigkeit den Drehschieber an seiner Drehbewegung nicht hindert. Vorzugsweise sollte deshalb der flüssigkeitsdurchlässige Abschnitt am oberen Teil des Drehschiebers vorgesehen und/oder perforiert sein.

Eine weitere gegenwärtig bevorzugte Ausführung ist vorgesehen als Filtereinsatz für Behälter, insbesondere Teekannen, mit einem, insbesondere als Rotationskörper ausgebildeten, Filtergehäuse zur Aufnahme der Aromafeststoffe, das einen flüssigkeitsdurchlässigen ersten Abschnitt und einen flüssigkeitsundurchlässigen zweiten Abschnitt, der den die Aromafeststoffe aufnehmenden und vom Drehschieber in seiner Endstellung begrenzten Raum bildet, aufweist, wobei der Drehschieber bei seiner Bewegung von der Anfangs- in die Endstellung die Aromafeststoffe in den zweiten Abschnitt verbringt und der erste Abschnitt und der zweite Abschnitt im wesentlich in Drehrichtung des Schiebers nebeneinander angeordnet sind.

Diese Ausführung erlaubt eine gezielte Beendigung des Ziehprozesses der Aromafeststoffe im Behälter durch Eingreifen des Benutzers, ohne daß der Filtereinsatz entnommen werden muß. Dies geschieht dadurch, daß die Aromafeststoffe zunächst in das Filtergehäuse gefüllt werden, dort in Kontakt mit der Flüssigkeit im Behälter gelangen und entsprechende Aromastoffe an diese abgeben und nach Ablauf der Ziehzeit der Drehschieber gedreht wird und dadurch den nun aus den Aromafeststoffen entstandenen Filterschlamm in den flüssigkeitsundurchlässigen zweiten Abschnitt verbringt. Wenn der Filterschlamm durch Rotation des Drehschiebers vollständig in den flüssigkeitsundurchlässigen zweiten Abschnitt verbracht worden ist, besteht kein Kontakt mehr zu der umgebenden Flüssigkeit, wodurch der Ziehprozeß gezielt beendet wird. Dabei wird der Drehschieber in eine solche Stellung gedreht, daß er den nun im flüssigkeitsundurchlässigen zweiten Abschnitt des Filtergehäuses befindlichen Filterschlamm vom übrigen Teil und insbesondere vom flüssigkeitsdurchlässigen ersten Abschnitt des Filtergehäuses separiert. Somit begrenzt der Drehschieber in dieser Stellung den vom flüssigkeitsundurchlässigen zweiten Abschnitt des Filtergehäuses gebildeten Raum, wodurch verhindert wird, daß der Filterschlamm auf unerwünschte Weise den flüssigkeitsundurchlässigen zweiten Abschnitt des Filtergehäuses wieder verlassen und mit der den zweiten Abschnitt umgebenden Flüssigkeit wieder in Kontakt treten kann. Da der Filterschlamm im flüssigkeitsundurchlässigen zweiten Abschnitt des Filtergehäuses von der 'Umgebung' separiert ist und somit auch kein weiterer Kontakt mit der umgebenden Flüssigkeit im Behälter besteht, kann der Filtereinsatz im Behälter und in der Flüssigkeit verbleiben, ohne daß eine weitere Beeinflussung der umgebenden Flüssigkeit durch den Filterschlamm stattfindet. Demnach braucht der erfindungsgemäße Filtereinsatz auch nach Beendigung des Ziehprozesses aus dem Behälter und somit der Flüssigkeit nicht entnommen zu werden.

Zweckmäßigerweise weist der erste Abschnitt des Filtergehäuses mindestens eine zumindest teilweise perforierte Wandung und/oder mindestens eine mit einem Siebgewebe überzogene Aussparung auf.

Schließlich kann ein zum flüssigkeitsdurchlässigen ersten Abschnitt gehörender Teil des Bodens ebenfalls flüssigkeitsdurchlässig sein. Ein solcher halboffener Boden läßt eine besonders einfache Reinigung des Inneren des Filtergehäuses zu, da insbesondere die Möglichkeit des Durchspülens besteht.

Außerdem sollte sich der Drehschieber zumindest mit einem Teil seiner Ränder in im wesentlichen dichtender Gleitanlage an zumindest einem Teil der Wandungen des Gehäuses befinden.

Eine gegenwärtig bevorzugte Ausführung der Erfindung zeichnet sich dadurch aus, daß sich der Drehschieber über die gesamte Weite des Gehäuses erstreckt und somit als Doppelflügel ausgebildet ist, wobei die Drehachse durch den beide Flügel miteinander verbindenden Zentralabschnitt des Drehschiebers verläuft. Vorzugsweise erstreckt sich der Drehschieber bei dieser Ausführung axial über den gesamten Durchmesser des Gehäuses und befindet sich mit seinen Rändern im wesentlichen in dichtender Gleitanlage an den Wandungen des Gehäuses zur Erzielung einer weitestgehend flüssigkeitsundurchlässigen Abdichtung. Bei dieser Ausführung wird das Gehäuse vorzugsweise in zwei gleich große Abschnitte unterteilt, die sich jeweils über einen Winkel von 180° erstrecken, wobei es sich bei dem einen Abschnitt um den flüssigkeitsdurchlässigen ersten Abschnitt und bei dem anderen Abschnitt um den flüssigkeitsundurchlässigen zweiten Abschnitt handelt. Vor der Zubereitung wird der Drehschieber so eingestellt, daß im ersten Abschnitt ein flüssigkeitsdurchlässiger Bereich maximaler Größe gebildet wird. Dabei wird der Drehschieber in eine Position gebracht, in der er den ersten Abschnitt von dem zweiten Abschnitt trennt. In den flüssigkeitsdurchlässigen ersten Abschnitt werden dann die Aromafeststoffe eingefüllt und anschließend aufgebrüht. Nach Ablauf der Ziehzeit wird der Drehschieber um 180° gedreht, wodurch die Aromafeststoffe aus dem flüssigkeitsdurchlässigen ersten Abschnitt in den gegenüberliegenden flüssigkeitsundurchlässigen zweiten Abschnitt transportiert werden, wo dann der Kontakt zur umgebenden Flüssigkeit unterbrochen ist und keine Aromastoffe mehr in die Flüssigkeit abgegeben werden können.

Alternativ kann der Drehschieber auch als sich radial von der Drehachse zur Wandung des Gehäuses erstreckender Flügel ausgebildet und der zweite Abschnitt von einem, insbesondere zusätzlich zu dem in seiner Endlage befindlichen Drehschieber von der Wandung des Gehäuses vorspringenden, feststehenden Element begrenzt sein. Bei dieser alternativen Ausführung ist somit zusätzlich ein feststehendes Element vorgesehen, welches vorzugsweise im wesentlichen oder nahezu von der Zentralachse des Filtergehäuses radial bis zur Gehäusewandung verläuft, während der Drehschieber als bewegliches Element ausgebildet ist, welches sich ebenfalls vorzugsweise von der Zentralachse zur Gehäusewandung erstreckt. Bei dieser alternativen Ausführung wird zwischen dem feststehenden Element und dem Drehschieber eine Kammer gebildet, die in Abhängigkeit von der Stellung des Drehschiebers entweder den flüssigkeitsdurchlässigen ersten Abschnitt oder den flüssigkeitsundurchlässigen zweiten Abschnitt bildet. Durch Drehbewegung des Drehschiebers können die Aromafeststoffe vom flüssigkeitsdurchlässigen ersten Abschnitt in den flüssigkeitsundurchlässigen zweiten Abschnitt verbracht werden, wobei sich in Abhängigkeit von der Größe und insbesondere dem Winkelumfang der Abschnitte der Mindest-Winkel der Drehbewegung ergibt. Demgegenüber wird der Maximal-Winkel der Drehbewegung des Schiebers vom Volumen der Aromafeststoffe bzw. des Filterschlamms bestimmt, d.h. der Drehschieber kann so weit verdreht werden, bis der Filterschlamm im flüssigkeitsundurchlässigen zweiten Abschnitt im wesentlichen zusammengepreßt wird.

Bei einer weiteren bevorzugten Ausführung ist der Drehschieber an demjenigen Abschnitt, der im in eine Flüssigkeit eingetauchten Zustand des Drehschiebers benachbart zur Flüssigkeitsoberfläche liegt oder aus dieser herausragt, mit einem, insbesondere als Lasche ausgebildeten, Griff versehen, um eine einfache manuelle Bedienbarkeit zu erlauben.

Für den Fall, daß ein Deckel zum Verschließen einer, insbesondere an der Oberseite des Gehäuses vorgesehenen, Öffnung verwendet wird, kann vorzugsweise der Griff am Drehschieber direkt, insbesondere einstückig, befestigt sein und der Deckel einen Durchbruch aufweisen, durch den bei auf das Gehäuse aufgesetztem Deckel der Griff nach außen ragt. Somit kann zum einen das Gehäuse verschlossen werden und bleibt zum anderen eine sichere Bedienung des Drehschiebers mit Hilfe des Griffes gewährleistet.

Alternativ kann am Drehschieber ein Stiel befestigt sein, der durch ein Loch im Deckel geführt ist und an dessen außenliegendem freiem Ende der Griff sitzt.

Bei einer weiteren Alternative kann der Deckel auf das Gehäuse derart aufgesetzt werden, daß er am Gehäuse drehbar gelagert ist, und der Drehschieber an der dem Gehäuse zugewandten Seite des Deckels drehfest befestigt sein. Dadurch ergibt sich eine besonders sichere Drehlagerung des Drehschiebers.

Bei der zuletzt genannten Ausführung kann der Deckel das alleinige Drehlager für den Drehschieber bilden, so daß der Drehschieber am Deckel hängt und nur über den Deckel am Gehäuse drehbar gelagert ist. Bei dieser Ausführung ist also der Drehschieber feststehend in bezug auf den Deckel an diesem angebracht und kann einen integrativen Bestandteils des Deckels bilden. Durch Rotation des auf dem Gehäuse aufgesetzten Deckels relativ zum Gehäuse werden die Aromafeststoffe vom flüssigkeitsdurchlässigen ersten Abschnitt in den flüssigkeitsundurchlässigen zweiten Abschnitt des Gehäuses verbracht. Somit wird ein Verschwenken des Drehschiebers durch Drehbewegung des Deckels bewirkt. Diese Ausführung erlaubt eine besonders einfache, jedoch wirkungsvolle Konstruktion der erfindungsgemäßen Vorrichtung, da zusätzliche Lager nicht erforderlich sind, was sich vorteilhaft auf die Herstellungskosten auswirkt.

Selbstverständlich kann der Drehschieber aber auch ausschließlich oder zusätzlich am Gehäuse drehbar gelagert sein, beispielsweise mit Hilfe eines spitzen Fortsatzes, der an der Unterseite des Drehschiebers ausgebildet ist und in eine entsprechende Vertiefung im Boden des Gehäuses eingreift und so etwas wie ein Nadellager bildet.

Zur weiteren Erhöhung des Bedienkomforts kann eine, insbesondere zeitlich steuerbare, Antriebseinrichtung vorgesehen sein, die den Drehschieber antreibt. Der Benutzer kann an einer Zeituhr die gewünschte Ziehzeit einstellen, und nach Ablauf dieser Zeit wird selbsttätig die Antriebseinrichtung aktiviert, wodurch der Drehschieber in entsprechende Drehbewegung versetzt wird, um die Aromafeststoffe in den in der Endstellung des Drehschiebers begrenzten Raum zu verbringen.

Abschließend sei noch angemerkt, daß der Drehschieber vorzugsweise als im wesentlichen ebenes plattenförmiges Element ausgebildet sein sollte.

Weitere bevorzugte Ausführungen der Erfindung sind in den abhängigen Ansprüchen angegeben.

Nachfolgend werden bevorzugte Ausführungsbeispiele der Erfindung anhand der beiliegenden Zeichnungen näher erläutert. Es zeigen:
- Figur 1: eine erste Ausführung der erfindungsgemäßen Vorrichtung in Draufsicht (a) und in Seitenansicht (b) sowie den Boden des Filtergehäuses (c);
- Figur 2: eine zweite Ausführung in Draufsicht (a) und in Seitenansicht (b) sowie den Boden des Filtergehäuses (c);
- Figur 3: eine gegenüber der zweiten Ausführung modifizierte dritte Ausführung in Draufsicht (a) und in Seitenansicht (b);
- Figur 4: die dritte Ausführung mit dem Drehschieber in seiner Anfangsstellung (a) und seiner Endstellung (b);
- Figur 5: einen Deckel für das Filtergehäuse der zweiten und dritten Ausführung; und
- Figur 6: in durchsichtiger perspektivischer Darstellung schematisch eine vierte Ausführung der erfindungsgemäßen Vorrichtung in einer Kanne.

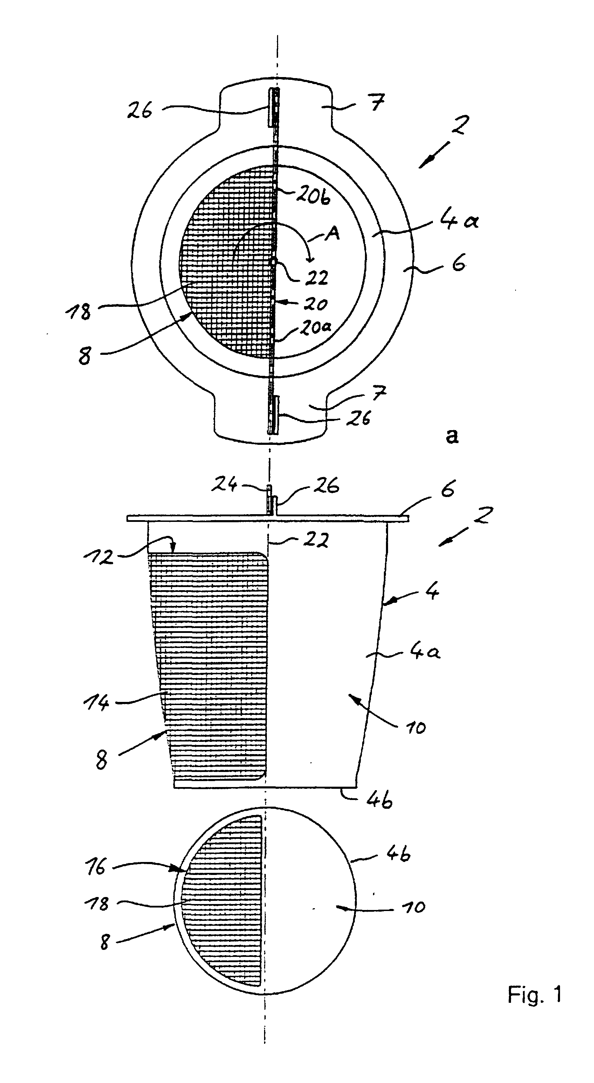

In Figur 1 ist eine erste Ausführung 2 eines Filtereinsatzes dargestellt, der ein Filtergehäuse 4 aufweist. Das Filtergehäuse 4 besitzt eine umlaufende Seitenwand 4a und einen Boden 4b und hat in der dargestellten Ausführung die Form eines zum Boden 4b hin konisch zulaufenden Rotationskörpers, wie Figur 1b erkennen läßt. An seiner Oberseite 4c ist das Filtergehäuse 4 offen und weist dort einen umlaufenden flanschartigen Rand 6 auf. Der Filtereinsatz 2 wird in einen in den Figuren nicht dargestellten Behälter eingehängt, indem er mit dem Boden 4b und der Seitenwand 4a des Filtergehäuses 4 durch eine Öffnung des Behälters in dessen Inneres eingesetzt und mit seinem umlaufenden flanschartigen Rand 4 auf einen die Öffnung des Behälters begrenzenden Randabschnitt aufgelegt wird.

Demnach dient der flanschartige Rand 6 als Halterung des Filtereinsatzes 2 in einem Behälter.

Beim Behälter kann es sich vorzugsweise um eine Kaffee- oder Teekanne handeln. Es ist aber auch denkbar, den Filtereinsatz in einem Trinkbehälter wie beispielsweise einer Tasse zu verwenden.

Wie die Figuren 1 a und c erkennen lassen, ist das Filtergehäuse 4 im Querschnitt kreisförmig. An zwei diametral gegenüberliegenden Stellen ist am flanschförmigen Rand 6 jeweils eine vorspringende Lasche 7 angeformt. Diese Laschen 7 dienen in erster Linie als Griff zum Einsetzen und Herausnehmen des Filtereinsatzes 2, können jedoch auch eine Haltefunktion übernehmen für den Fall, daß der Durchmesser der Öffnung des Behälters ein wenig größer als der Durchmesser des flanschförmigen Randes 6 ist.

Das Filtergehäuse 4 ist in einen ersten Abschnitt 8 und einen zweiten Abschnitt 10 unterteilt. Jeder Abschnitt 8 und 10 bildet einen sogenannten 180°-Sektor und somit eine Hälfte des Filtergehäuses 4, wie insbesondere die Figuren 1a und c erkennen lassen.

Der erste Abschnitt 8 ist flüssigkeitsdurchlässig, wozu in der zugehörigen Hälfte der Seitenwand 4a des Filtergehäuses 4 ein Durchbruch 12 vorgesehen ist, der in der dargestellten Ausführung mit einem Siebgewebe bedeckt ist. In ähnlicher Weise ist die zum ersten Abschnitt 8 gehörende Hälfte des Bodens 4b des Filtergehäuses 4 mit einem Durchbruch 16 versehen, der mit einem Siebgewebe 18 bedeckt ist. Da der flüssigkeitsdurchlässige erste Abschnitt 8 die eine Hälfte des Filtergehäuses 4 bildet, erstreckt sich der Durchbruch 12 in der Seitenwand 4a des Filtergehäuses 4 mit dem Siebgewebe 14 über einen Winkel von 180°, während der Durchbruch 16 mit dem Siebgewebe 18 im Boden 4b eine entsprechende Halbkreisform besitzt. Bei dem Siebgewebe kann es sich beispielsweise um ein Edelstahl- oder Kunststoffsiebgewebe handeln. Anstelle der dargestellten Siebgewebe 14 und 18 können auch entsprechende Perforationen in der Seitenwand 4a und dem Boden 4b des Filtergehäuses 4 vorgesehen sein.

Demgegenüber ist der zweite Abschnitt 10 flüssigkeitsundurchlässig, wozu der zugehörige Teil der Seitenwand 4a und die zugehörige Hälfte des Bodens 4b des Filtergehäuses 4 entsprechend geschlossen sind.

Wie insbesondere Figur 1a erkennen läßt, ist im Inneren des Filtergehäuses 4 ein Drehschieber 20 um eine Drehachse 22 drehbar gelagert. In der dargestellten Ausführung fällt die Drehachse 22 des Drehschiebers 20 mit der Symmetrie- bzw. Mittelachse des Filtergehäuses 4 zusammen. Bei dieser Ausführung ist der Drehschieber 20 als sogenannter Doppelflügel ausgebildet, wobei die Drehachse 22 durch die beide Flügel 20a und 20b miteinander verbindende Mitte des Drehschiebers 20 verläuft, wie Figur 1a erkennen läßt.

Der Drehschieber 20 ist in der dargestellten Ausführung als ebenes plattenförmiges Element ausgebildet und erstreckt sich durch das Innere des Filtergehäuses 4 von dessen Oberseite 4c bis zu dessen Boden 4b. Dabei befindet sich der Drehschieber 20 mit seinen (in den Figuren nicht erkennbaren) Rändern in dichtendem Gleiteingriff mit der Seitenwand 4 und dem Boden 4b des Filtergehäuses 4.

Wie die Figuren 1 a und b erkennen lassen, weist der Drehschieber 20 an seiner Oberseite einen oberen Abschnitt 24 auf, der sich über die Oberseite 4c des Filtergehäuses 4 hinaus erstreckt und gleichzeitig zu beiden Seiten hin den flanschartigen Rand 6 übergreift. Dieser obere Abschnitt 24 dient zum einen als Griff für den Benutzer und wirkt zum anderen mit entsprechend auf den Laschen 7 vorgesehenen Anschlägen 26 zusammen, wodurch die Drehbewegung des Drehschiebers 20 begrenzt wird, wie insbesondere Figur 1a erkennen läßt.

Die beiden Abschnitte 8 und 10, der Drehschieber 20 und die Anschläge 26 sind so angeordnet, daß in der in Figur 1a gezeigten Endstellung der Drehschieber 20, der sich ja über den gesamten Durchmesser des Filtergehäuses 4 erstreckt, beide Abschnitte 8 und 10 voneinander trennt.

Nachfolgend wird die Arbeitsweise des Filtereinsatzes gemäß Figur 1 erläutert.

Zunächst muß der Drehschieber 20 die Anfangsstellung gemäß Figur 1a einnehmen. Dann wird in den ersten Abschnitt 8, der ja einerseits von der Seitenwand 4a des Filtergehäuses 4 und andererseits vom Drehschieber 20 begrenzt wird, der zu verarbeitende Stoff eingefüllt, bei welchem es sich gewöhnlich um gemahlenen Kaffee oder Teegut handelt. Der so vorbereitete Filtereinsatz 2 wird in einen entsprechend geeigneten Behälter eingesetzt, bei dem es sich gewöhnlich um eine Kaffee- oder Teekanne handelt. Der Behälter ist mit Flüssigkeit, vorzugsweise Wasser, gefüllt. Die Flüssigkeit wird aufgebrüht, und der Filtereinsatz 2 verbleibt im Behälter. Nach Ablauf einer bestimmten Ziehzeit wird der Drehschieber 20 in Richtung des Pfeils A gemäß Figur 1a um etwa 180° gedreht, bis er wieder in Anlage an die Anschläge 26 - allerdings nun an deren gegenüberliegenden Seiten - gelangt. Dabei wird der Filterschlamm, bei dem es sich gewöhnlich um nun in der Flüssigkeit aufgelösten, gemahlenen Kaffee oder in der Flüssigkeit nun aufgelöstes Teegut handelt, aus dem flüssigkeitsdurchlässigen ersten Abschnitt 8 in den flüssigkeitsundurchlässigen zweiten Abschnitt 10 transportiert, wodurch der Kontakt des Filterschlammes zur umgebenden Flüssigkeit unterbrochen wird und nun keine Aromastoffe mehr in die Flüssigkeit abgegeben werden können. Im flüssigkeitsundurchlässigen zweiten Abschnitt 10 ist der Filterschlamm nun völlig isoliert von der umgebenden Flüssigkeit, da dieser Abschnitt 10 einerseits von der Seitenwand 4a des Filtergehäuses 4 und andererseits vom Drehschieber 20 gegenüber der Umgebung abgedichtet begrenzt wird.

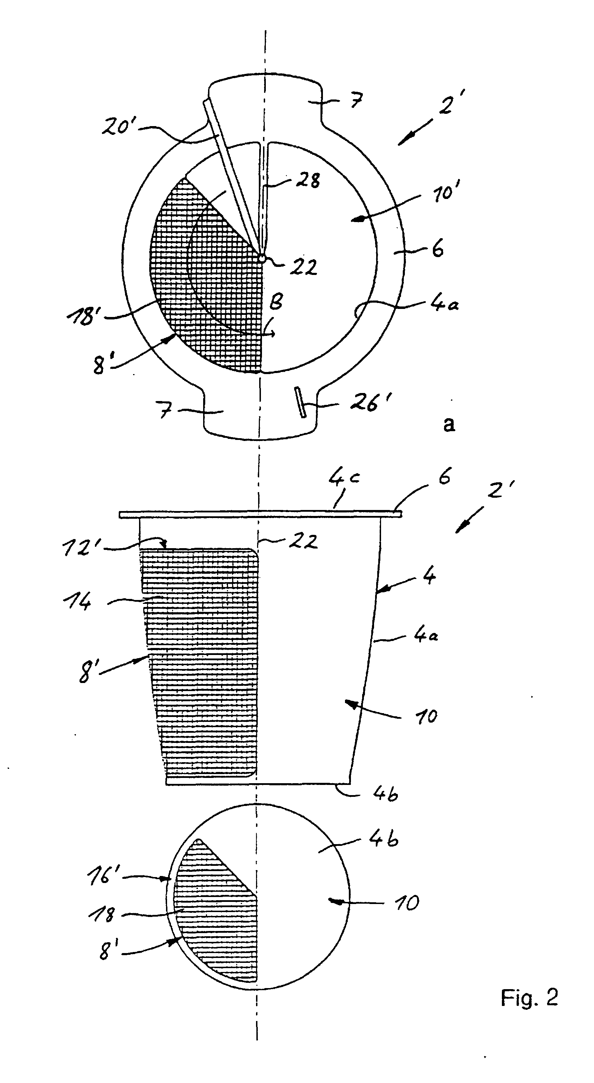

In Figur 2 ist eine weitere Ausführung 2' eines Filtereinsatzes dargestellt, die sich von der Ausführung gemäß Figur 1 insbesondere dadurch unterscheidet, daß der Drehschieber 20' nicht als Doppelflügel, sondern als Einfachflügel ausgebildet ist, der sich radial von der Drehachse 22 zur Seitenwand 4a des Filtergehäuses 4 erstreckt, und zusätzlich ein feststehendes Wandelement 28 vorgesehen ist, das an der Innenseite der Seitenwand 4a und des Bodens 4b angeformt ist und sich zur Drehachse radial erstreckt. Sowohl der Drehschieber 20' als auch das feststehende Wandelement 20 sind jeweils als ebene plattenförmige Elemente ausgebildet. Wie weiterhin ein Vergleich der Figur 2 mit der Figur 1 erkennen läßt, ist der flüssigkeitsdurchlässige erste Abschnitt 8' im dargestellten zweiten Ausführungsbeispiel 2' nicht als 180°-Sektor, sondern als 135°-Sektor ausgeführt. Der Durchbruch 12' erstreckt sich demnach über einen Winkel von etwa 135° entlang der Seitenwand 4a des Filtergehäuses 4 in dessen Umfangsrichtung. Entsprechend ist auch der Durchbruch 16' im Boden 4b des Filtergehäuses 4 ausgebildet, wie Figur 2c erkennen läßt. Schließlich ist im Gegensatz zu der ersten Ausführung nur ein einziger Anschlag 26' auf einer Lasche 7 vorgesehen, und zwar außermittig in bezug auf die Lasche 7, wie Figur 2a erkennen läßt.

Alle übrigen Elemente entsprechen denen der ersten Ausführung, so daß auf eine weitere Erläuterung dieser übereinstimmenden Elemente zur Vermeidung von Wiederholungen verzichtet wird.

In Figur 2a ist der Drehschieber 20' in seiner Anfangsstellung gezeigt. Ein weiteres Verschwenken in Richtung auf das feststehende Wandelement 28 ist nicht möglich, da sich der Drehschieber 20' bereits mit seinem zur Drehachse 22 benachbarten Abschnitt in Anlage an den entsprechenden Abschnitt des feststehenden Wandelementes 28 befindet.

Bei dieser zweiten Ausführung wird der zu verarbeitende Stoff in das Innere des Filtergehäuses 4, vorzugsweise im Bereich des ersten Abschnittes 8', gegeben, wenn der Drehschieber 20' die in Figur 2a gezeigte Anfangsstellung einnimmt. Da in dieser Stellung des Drehschiebers 20' die beiden Abschnitte 8' und 10 nicht voneinander getrennt sind, also keine durchgehende Trennwand existiert, kann sich der zu verarbeitende Stoff natürlich auch in den zweiten flüssigkeitsundurchlässigen Abschnitt 10 verteilen, was die Funktion des Filtereinsatzes 2' jedoch nicht in irgendeiner Weise beeinflußt.

Nach Ablauf der Ziehzeit wird der Drehschieber 20' aus seiner in Figur 2a gezeigten Anfangsstellung in Richtung des Pfeils B gedreht und nimmt dabei den im ersten Abschnitt 8' befindlichen Filterschlamm mit. Die Drehbewegung des Drehschiebers 20' kann so lange fortgesetzt werden, bis er in Anlage an den Anschlag 26' gelangt, wodurch nun sämtlicher Filterschlamm in den flüssigkeitsundurchlässigen zweiten Abschnitt 10 verbracht ist.

Selbstverständlich ist es auch denkbar, den Anschlag 26' an eine andere Stelle zu setzen, so daß der den Filterschlamm einengende Raum innerhalb des zweiten Abschnittes 10 auch kleiner sein kann.

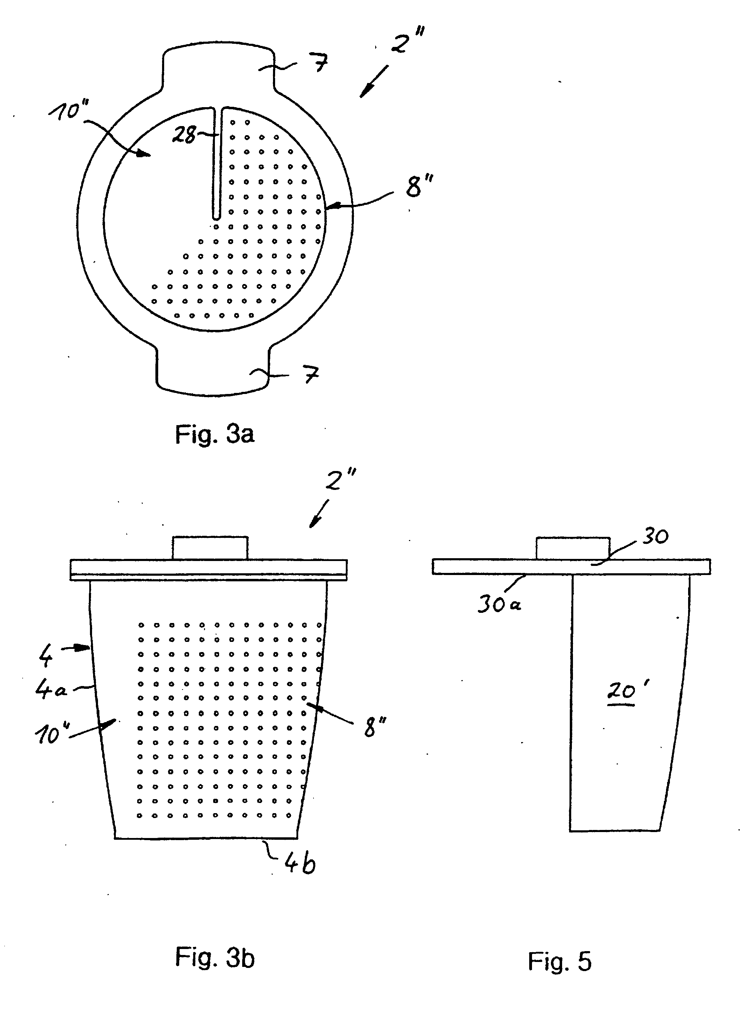

In Figur 3 ist eine gegenüber der zweiten Ausführung 2' gemäß Figur 2 geringfügig modifizierte Ausführung 2" eines Filtereinsatzes dargestellt, die sich von der Ausführung gemäß Figur 2 dadurch unterscheidet, daß der flüssigkeitsdurchlässige erste Abschnitt 8" nicht als 135°-Sektor ausgefürht ist, sondern sich über einen Winkel von etwa 225° erstreckt und nicht ein Sieb aufweist, sondern perforiert ist.

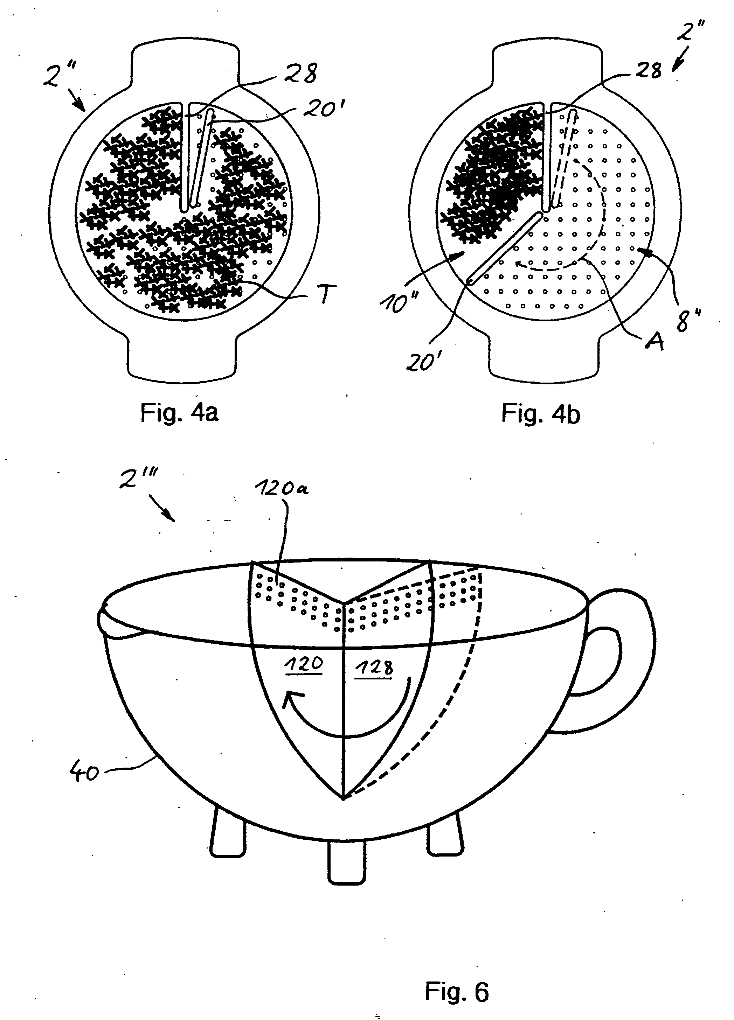

In Figur 4 ist die Betriebsweise der dritten Ausführung 2" dargestellt, wobei diese Darstellung hinsichtlich der Wirkungsweise des Drehschiebers stellvertretend für alle zuvor und auch nachfolgend beschriebenen Ausführungen zu sehen ist. In Figur 4a befindet sich der Drehschieber 20' in seiner Anfangsstellung benachbart zum feststehenden Wandelement 28. Innerhalb des Teefiltergehäuses schwimmt in der Flüssigkeit das Teegut T, welches im wesentlich über das gesamte Teefiltergehäuse verteilt ist. Wird nun der Drehschieber 20' in Richtung des in Figur 4b dargestellten Pfeils A gedreht, gelangt er in die in die Figur 4b gezeigte Endstellung, in der er den flüssigkeitsundurchlässigen zweiten Abschnitt 10" vom flüssigkeitsdurchlässigen ersten Abschnitt 8" trennt. Während der Drehbewegung von seiner Anfangsstellung gemäß Figur 4a in seine Endstellung gemäß Figur 4b nimmt der Drehschieber 20 ' das Teegut T mit und kapselt es in den flüssigkeitsundurchlässigen zweiten Abschnitt 10" ein, welcher einen Raum bildet, der einerseits vom sich in seiner Endstellung befindlichen Drehschieber 20' und andererseits vom feststehenden Wandelement 28 begrenzt wird. Somit ist das im flüssigkeitsundurchlässigen zweiten Abschnitt 10" gesammelte Teegut T vom flüssigkeitsdurchlässigen ersten Abschnitt 8" getrennt und gegenüber der umgebenen Flüssigkeit abgeschottet, so daß es keine Aromastoffe mehr in die umgebende Flüssigkeit abgeben kann.

In den zuvor beschriebenen Ausführungen kann die Drehachse 22 beispielsweise als Metallstab vorgesehen sein, welcher axial im Filtergehäuse 4 befestigt ist und an welcher der Drehschieber 20 bzw. 20' gelenkig gelagert ist.

Für die zweite Ausführung 2' und die dritte Ausführung 2" ist es aber alternativ beispielsweise auch denkbar, zur drehbaren Lagerung einen Deckel zu verwenden, wie er in Figur 5 unter dem Bezugszeichen 30 dargestellt ist. Hierzu ist an der Unterseite 30a dieses Deckels 30 der Drehschieber 20' gegenüber dem Deckel 30 drehfest befestigt, so daß er bei auf dem Filtereinsatz 2' oder dem entsprechenden Behälter aufgesetztem Deckel 30 hängend in das Filtergehäuse 14 ragt. Damit der Deckel 30 die drehbare Lagerung des Drehschiebers 20' übernimmt, muß sichergestellt sein, daß der Deckel 30 selbst drehbar auf der Oberseite 4c des Filtergehäuses 4 des Filtereinsatzes 2' oder auf der Oberseite des verwendeten Behälters drehbar angeordnet werden kann. Vorzugsweise kann der Drehschieber 20' einstückig mit dem Deckel 30 gemäß Figur 3 ausgebildet sein. Durch Drehen des aufgesetzten Deckels 30 wird somit automatisch der Drehschieber 20' einer Drehbewegung in der zuvor beschriebenen Weise unterworfen.

Zusätzlich wäre es aber auch denkbar, den Drehschieber 20' nicht vollständig frei hängend bzw. schwebend zu haltern, sondern an der Unterseite des Drehschiebers 20' eine kleine Spitze auszubilden, die in eine entsprechende Vertiefung im Boden 4c des Filtergehäuses 4 eingreift (, was in den Figuren jedoch nicht dargestellt ist).

Schließlich ist es auch denkbar, anstelle des in Figur 3 gezeigten Deckels 30 einen Deckel mit einem entsprechenden Durchbruch vorzusehen, durch den bei aufgesetztem Deckel der Drehschieber 20 bzw. 20' mit seinem Oberteil gesteckt und somit bequem von außen bedienbar ist. Schließlich könnte auch der Deckel mit einer zentralen Bohrung versehen sein, durch die eine Stange gesteckt ist, an deren außenliegendem oberem Ende ein Griff und an deren gegenüberliegendem inneren Ende der Drehschieber befestigt ist, wobei diese Stange gleichzeitig als Drehachse dient.

In Figur 6 ist eine vierte Ausführung 2'" dargestellt, die sich von den zuvor beschriebenen Ausführungen dadurch unterscheidet, daß der Drehschieber 120 und das feststehende Wandelement 128 nicht Teil eines in einen Behälter wie beispielsweise eine Teekanne anzuordnenden Filtereinsatzes sind, sondern direkt in einem Behälter wie beispielsweise der in Figur 6 dargestellten Kanne 40 positioniert sind. Dabei ist der Drehschieber 120 mit seinem dem feststehenden Wandelement 128 zugewandten vertikalen Seitenrand am benachbarten vertikalen Seitenrand des feststehenden Wandelementes 128 verschwenkbar gelagert. Ferner weist der Drehschieber 120 an seinem Oberteil einen perforierten Abschnitt 120a auf, der flüssigkeitsdurchlässig ist und somit ein Überschwappen der Flüssigkeit über den Drehschieber 120 bei dessen Drehbewegung verhindert. Die Funktion des Drehschiebers 120 der vierten Ausführung 2'" gemäß Figur 6 ist die gleiche wie die der zuvor beschriebenen Ausführungen, wobei in Figur 6 der Drehschieber 120 in gestrichelten Linien in seiner Anfangsstellung und in durchgezogenen Linien in seiner Endstellung gezeigt ist.

Schließlich kann noch eine zeitlich gesteuerte Antriebseinrichtung vorgesehen sein, die in den Figuren jedoch nicht dargestellt ist. Der Benutzer stellt an einer Zeituhr die gewünschte Ziehzeit ein. Nach Ablauf der Zeit wird selbsttätig die Antriebseinrichtung aktiviert, durch den der Drehschieber 20 bzw. 20' in Drehbewegung versetzt wird, um den Filterschlamm in den flüssigkeitsundurchlässigen zweiten Abschnitt 10 zu transportieren.

Abschließend sei noch angemerkt, daß die zuvor anhand verschiedener Ausführungsbeispiele beschriebene Vorrichtung vollständig aus Kunststoff bestehen kann.

## Patentansprüche

1. Vorrichtung zum Einkapseln von in eine Flüssigkeit, insbesondere Wasser, gegebenen Aromafeststoffen (T), insbesondere Teegut oder Kaffee, mit einem zwischen einer Anfangs- und einer Endstellung beweglich gelagerten Drehelement (20; 20'; 120), das in seiner Endstellung einen die Aromafeststoffe (T) aufnehmenden Raum (8; 8'; 8") begrenzt, **dadurch gekennzeichnet, daß** das Drehelement als um eine im wesentlichen vertikale Drehachse (22) drehbar gelagerter flügelförmiger Drehschieber (20; 20'; 120) ausgebildet ist.

2. Vorrichtung nach Anspruch 1,
**gekennzeichnet durch** ein Gehäuse (4; 40).

3. Vorrichtung nach Anspruch 2 zum Einsatz in einem Behälter, insbesondere einer Teekanne, welcher ein, insbesondere als Rotationskörper ausgebildetes, Gehäuse (40) aufweist,
**dadurch gekennzeichnet, daß** das Gehäuse (40) der Vorrichtung (2''') vom Gehäuse (40) des Behälters gebildet wird.

4. Vorrichtung nach Anspruch 3,
**dadurch gekennzeichnet, daß** der Drehschieber (120) einen flüssigkeitsdurchlässigen Abschnitt (120a) aufweist.

5. Vorrichtung nach Anspruch 4,
**dadurch gekennzeichnet, daß** der flüssigkeitsdurchlässige Abschnitt (120a) am oberen Teil des Drehschiebers (120) vorgesehen ist.

6. Vorrichtung nach Anspruch 4 oder 5,
**dadurch gekennzeichnet, daß** der flüssigkeitsdurchlässige Abschnitt (120a) perforiert ist.

7. Vorrichtung nach Anspruch 2 als Filtereinsatz (2; 2'; 2") für Behälter, insbesondere Teekannen, mit einem, insbesondere als Rotationskörper ausgebildeten, Filtergehäuse (4) zur Aufnahme der Aromafeststoffe (T), das einen flüssigkeitsdurchlässigen ersten Abschnitt (8; 8') und einen flüssigkeitsundurchlässigen zweiten Abschnitt (10; 10'; 10"), der den die Aromafeststoffe aufnehmenden und vom Drehschieber (20') in seiner Endstellung begrenzten Raum bildet, aufweist, wobei der Drehschieber (20') bei seiner Bewegung von der Anfangs- in die Endstellung die Aromafeststoffe (T) in den zweiten Abschnitt (10; 10'; 10") verbringt und der erste Abschnitt (8; 8'; 8") und der zweite Abschnitt (10; 10'; 10") im wesentlichen in Drehrichtung (A; B) des Schiebers (20') nebeneinander angeordnet sind.

8. Vorrichtung nach Anspruch 7,
**dadurch gekennzeichnet, daß** der erste Abschnitt (8; 8') des Filtergehäuses (4) mindestens eine zumindest teilweise perforierte Wandung und/oder mindestens eine mit einem Siebgewebe (14, 18) überzogene Aussparung (12, 16; 12', 16') aufweist.

9. Vorrichtung nach Anspruch 7 oder 8,
**dadurch gekennzeichnet, daß** ein zum ersten Abschnitt (8; 8'; 8") gehörender Teil (16; 16') des Bodens (4b) des Filtergehäuses (4) ebenfalls flüssigkeitsdurchlässig ist.

10. Vorrichtung nach mindestens einem der Ansprüche 7 bis 9,
**dadurch gekennzeichnet, daß** das Filtergehäuse (4) und der Drehschieber (20; 20') ausschließlich aus Kunststoff bestehen.

11. Vorrichtung nach mindestens einem der Ansprüche 2 bis 10,
**dadurch gekennzeichnet, daß** sich der Drehschieber (20; 20'; 120) zumindest mit einem Teil seiner Ränder in im wesentlichen dichtender Gleitanlage an zumindest einem Teil der Wandungen (4a) des Gehäuses (4; 40) befindet.

12. Vorrichtung nach mindestens einem der Anprüche 2 bis 11,
**dadurch gekennzeichnet, daß** sich der Drehschieber (20) über die gesamte Weite des Gehäuses (4) erstreckt und somit als Doppelflügel ausgebildet ist, wobei die Drehachse (22) durch den beide Flügel (20a, 20b) miteinander verbindenden Zentralabschnitt des Drehschiebers (20) verläuft.

13. Vorrichtung nach mindestens einem der Ansprüche 2 bis 11,
**dadurch gekennzeichnet, daß** der Drehschieber (20'; 120) als sich radial von der Drehachse (22) zur Wandung (4a) des Gehäuses (4) erstreckender Flügel ausgebildet und der zweite Abschnitt (10) zusätzlich zu dem in seiner Endlage befindlichen Drehschieber (20'; 120) von einem, insbesondere von der Wandung (4a) des Gehäuses (4; 40) vorspringenden, feststehenden Element (28; 128) begrenzt ist.

14. Vorrichtung nach Anspruch 13,
**dadurch gekennzeichnet, daß** sich das feststehende Element (28; 128) von der Wandung (4a) des Gehäuses (4) im wesentlichen oder nahezu radial zur Drehachse (22) erstreckt.

15. Vorrichtung nach mindestens einem der Ansprüche 2 bis 14,
**dadurch gekennzeichnet, daß** der Drehschieber (20; 20'; 120) am Gehäuse (4; 40) drehbar gelagert ist.

16. Vorrichtung nach mindestens einem der Ansprüche 1 bis 15,
**dadurch gekennzeichnet, daß** der Drehschieber (20) an demjenigen Abschnitt (24), der im in eine Flüssigkeit eingetauchten Zustand des Drehschiebers (2) benachbart zur Flüssigkeitsoberfläche liegt oder aus dieser herausragt, mit einem, insbesondere als Lasche ausgebildeten, Griff versehen ist.

17. Vorrichtung nach mindestens einem der Ansprüche 2 bis 15 sowie nach Anspruch 16, mit einem Deckel zum Verschließen einer, insbesondere an der Oberseite (4c) des Gehäuses (4) vorgesehenen, Öffnung,
**dadurch gekennzeichnet, daß** der Griff am Drehschieber direkt, vorzugsweise einstückig, befestigt ist und der Deckel einen Durchbruch aufweist, durch den bei auf das Filtergehäuse aufgesetztem Deckel der Griff nach außen ragt.

18. Vorrichtung nach mindestens einem der Ansprüche 2 bis 15 sowie nach Anspruch 16; mit einem Deckel zum Verschließen einer, insbesondere an der Oberseite (4c) des Gehäuses (4) vorgesehenen, Öffnung,
**dadurch gekennzeichnet, daß** am Drehschieber ein Stiel befestigt ist, der durch ein Loch im Deckel geführt ist und an dessen außenliegendem freiem Ende der Griff sitzt.

19. Vorrichtung nach mindestens einem der Ansprüche 2 bis 14 sowie nach Anspruch 16, mit einem Deckel (30) zum Verschließen einer, insbesondere an der Oberseite (4c) des Gehäuses (4; 40) vorgesehenen, Öffnung,
**dadurch gekennzeichnet, daß** der Deckel (30) auf das Gehäuse (4; 40) derart aufsetzbar ist, daß er am Gehäuse (4; 40) drehbar gelagert ist, und der Drehschieber (20'; 120) an der dem Gehäuse (4; 40) zugewandten Seite (30a) des Deckels (30) drehfest befestigt ist.

20. Vorrichtung nach Anspruch 19,
**dadurch gekennzeichnet, daß** der Deckel (30) des Drehlager für den Drehschieber (20') bildet.

21. Vorrichtung nach mindestens einem der Ansprüche 1 bis 20,
**dadurch gekennzeichnet, daß** der Drehschieber (20; 20'; 120) als im wesentlichen ebenes plattenförmiges Element ausgebildet ist.

22. Vorrichtung nach mindestens einem der Ansprüche 1 bis 21,
**gekennzeichnet durch** eine, insbesondere zeitlich steuerbare, Antriebseinrichtung, die den Drehschieber antreibt, um die Aromafeststoffe (T) in den die Aromafeststoffe (T) aufnehmenden und vom Drehschieber in seiner Endstellung begrenzten Raum (8; 8'; 8") zu verbringen.

## Claims

1. Device for encapsulating flavourings (T) provided in a liquid, in particular water, in particular a tea product or coffee, comprising a rotary element (20; 20'; 120) movably mounted between a starting position and an end position and in its end position delimiting a space (8; 8'; 8'') receiving the flavourings (T), **characterised in that** the rotary element is formed as a wing-shaped rotary slide valve (20; 20'; 120) rotatably mounted about an axis of rotation (22) which is substantially vertical.

2. Device according to claim 1, **characterised by** a housing (4; 40).

3. Device according to claim 2 for use in a container, in particular a teapot, comprising a housing (40) formed in particular as a rotary body, **characterised in that** the housing (40) of the device (2''') is formed by the housing (40) of the container.

4. Device according to claim 3, **characterised in that** the rotary slide valve (120) comprises a liquid-permeable portion (120a).

5. Device according to claim 4, **characterised in that** the liquid-permeable portion (120a) is provided on the upper part of the rotary slide value (120).

6. Device according to claim 4 or 5, **characterised in that** the liquid-permeable portion (120a) is perforated.

7. Device according to claim 2 as a filter insert (2; 2'; 2'') for containers, in particular teapots, comprising a filter housing (4) formed in particular as a rotary body for receiving flavourings (T) comprising a liquid-permeable first portion (8; 8') and a liquid-impermeable second portion (10; 10'; 10'') forming the space receiving the flavourings and delimited by the rotary slide valve (20') in its end position, wherein the rotary slide valve (20'), when moved from the starting position into the end position, brings the flavourings (T) into the second portion (10; 10'; 10'') and the first portion (8; 8'; 8'') and the second portion (10; 10'; 10'') are substantially arranged next to one another in the rotary direction (A; B) of the rotary slide valve (20').

8. Device according to claim 7, **characterised in that** the first portion (8; 8') of the filter housing (4) comprises at least one at least partially perforated wall and/or at least one recess (12, 16; 12', 16') covered by a straining fabric (14, 18).

9. Device according to claim 7 or 8, **characterised in that** a part (16; 16') of the base (4b) of the filter housing (4) belonging to the first portion (8; 8'; 8'') is also liquid-permeable.

10. Device according to at least one of claims 7 to 9, **characterised in that** the filter housing (4) and the rotary slide valve (20; 20') consist exclusively of plastics material.

11. Device according to at least one of claims 2 to 10, **characterised in that** the rotary slide valve (20; 20'; 120) is located at least with a part of its edges in substantially sealing sliding abutment on at least a part of the walls (4a) of the housing (4; 40).

12. Device according to at least one of claims 2 to 11, **characterised in that** the rotary slide valve (20) extends over the entire width of the housing (4) and is therefore formed as a double wing, the axis of rotation (22) extending through the central portion of the rotary slide valve (20) connecting the two wings (20a, 20b) to one another.

13. Device according to at least one of claims 2 to 11, **characterised in that** the rotary slide valve (20'; 120) is formed as a wing extending radially from the axis of rotation (22) to the wall (4a) of the housing (4) and the second portion (10) is delimited, in addition to the rotary slide valve (20'; 120) in its end position, by a fixed element (28; 128) projecting in particular from the wall (4a) of the housing (4; 40).

14. Device according to claim 13, **characterised in that** the fixed element (28; 128) extends from the wall (4a) of the housing (4) substantially or approximately radially to the axis of rotation (22).

15. Device according to at least one of claims 2 to 14, **characterised in that** the rotary slide valve (20; 20'; 120) is rotatably mounted on the housing (4; 40).

16. Device according to at least one of claims 1 to 15, **characterised in that** the rotary slide valve (20) is provided with a handle, formed in particular as a tab, on that portion (24) located adjacent to the liquid surface or projecting therefrom when the rotary slide valve (2) is immersed into a liquid.

17. Device according to at least one of claims 2 to 15, and according to claim 16, comprising a lid for closing an aperture provided, in particular, on the top (4c) of the housing (4), **characterised in that** the handle is fastened directly to the rotary slide valve, preferably in one piece, and the lid comprises an opening through which the handle protrudes outwardly when the lid is placed on the filter housing.

18. Device according to at least one of claims 2 to 15, and according to claim 16, comprising a lid for closing an aperture provided, in particular, on the top (4c) of the housing (4), **characterised in that** a stem is fastened to the rotary slide valve and is guided through a hole in the lid and the handle is on the external free end thereof.

19. Device according to at least one of claims 2 to 14, and according to claim 16, comprising a lid (30) for closing an aperture provided, in particular, on the top (4c) of the housing (4; 40), **characterised in that** the lid (30) can be placed on the housing (4; 40) in such a way that it is rotatably mounted on the housing (4; 40) and the rotary slide valve (20'; 120) is non-rotatably fastened to the side (30a) of the lid (30) facing the housing (4; 40).

20. Device according to claim 19, **characterised in that** the lid (30) forms the pivot bearing for the rotary slide valve (20').

21. Device according to at least one of claims 1 to 20, **characterised in that** the rotary slide valve (20; 20'; 120) is formed as a substantially flat plate-shaped element.

22. Device according to at least one of claims 1 to 21, **characterised by** a drive mechanism which can be controlled in particular with respect to time and which drives the rotary slide valve to bring the flavourings (T) into the space (8; 8'; 8'') receiving the flavourings (T) and delimited by the rotary slide valve in its end position.

## Revendications

1. Dispositif pour l'encapsulation de produits aromatiques (T) introduits dans un liquide en particulier de l'eau, en particulier du thé ou du café, avec un élément de rotation (20 ; 20' ; 120) logé de façon mobile entre une position initiale et une position finale, qui délimite dans sa position finale un compartiment (8 ; 8' ; 8") recevant les produits aromatiques (T),
**caractérisé en ce que** l'élément de rotation est conçu comme un tiroir rotatif (20 ; 20' ; 120) en forme d'aile logée de façon rotative autour d'un axe de rotation (22) sensiblement vertical.

2. Dispositif selon la revendication 1,
**caractérisé par** un boîtier (4 ; 40).

3. Dispositif selon la revendication 2 pour une utilisation dans un récipient, en particulier une théière, qui présente un boîtier (40) réalisé en particulier comme un corps de rotation,
**caractérisé en ce que** le boîtier (40) du dispositif (2''') est formé par le boîtier (40) du récipient.

4. Dispositif selon la revendication 3,
**caractérisé en ce que** le tiroir rotatif (120) présente une partie (120a) perméable au liquide.

5. Dispositif selon la revendication 4,
**caractérisé en ce que** la partie (120a) perméable ou liquide est prévue sur la partie supérieure du tiroir rotatif (120).

6. Dispositif selon la revendication 4 ou 5,
**caractérisé en ce que** la partie (120a) perméable ou liquide est perforée.

7. Dispositif selon la revendication 2 en tant que cartouche filtrante (2 ; 2' ; 2") pour des récipients, en particulier des théières, avec un boîtier de filtre (4), conçu en particulier comme un corps de rotation, pour le logement des produits aromatiques (T), qui présente une première partie (8 ; 8') perméable au liquide et une seconde partie (10 ; 10' ; 10") imperméable au liquide, qui forme le compartiment recevant les produits aromatiques et délimité par le tiroir rotatif (20') dans sa position finale, le tiroir rotatif (20') amenant les produits aromatiques (T) dans la seconde partie (10 ; 10' ; 10") lors de son déplacement de la position initiale à la position finale et la première partie (8 ; 8' 8") et la seconde partie (10 ; 10' ; 10") étant disposées l'une à côte de l'autre sensiblement dans le sens de rotation (A ; B) du tiroir (20').

8. Dispositif selon la revendication 7,
**caractérisé en ce que** la première partie (8 ; 8') du boîtier de filtre (4) présente au moins une paroi au moins partiellement perforée et/ou au moins un évidement (12, 16 ; 12', 16') revêtu d'un tissu tamisant (14, 18).

9. Dispositif selon la revendication 7 ou 8,
**caractérisé en ce qu'**une partie (16 ; 16'), faisant partie de la première partie (8 ; 8' ; 8"), du fond (4b) du boîtier de filtre est également perméable au liquide.

10. Dispositif selon au moins l'une quelconque des revendications 7 à 9,
**caractérisé en ce que** le boîtier de filtre (4) et le tiroir rotatif (20 ; 20') sont exclusivement à base de plastique.

11. Dispositif selon au moins l'une quelconque des revendications 2 à 10,
**caractérisé en ce que** le tiroir rotatif (20 ; 20' ; 120) se trouve au moins avec une partie de ses bords en appui de glissement sensiblement étanche sur au moins une partie des parois (4a) du boîtier (4 ; (40).

12. Dispositif selon au moins l'une quelconque des revendications 2 à 11,
**caractérisé en ce que** le tiroir rotatif (20) s'étend sur toute la largeur du boîtier (4) et est donc conçu comme une double ailette, l'axe de rotation (22) passant par la partie centrale, reliant deux ailettes (20a, 20b) entre elles, du tiroir rotatif (20).

13. Dispositif selon au moins l'une quelconque des revendications 2 à 11,
**caractérisé en ce que** le tiroir rotatif (20' ; 120) est réalisé en tant qu'ailette s'étendant radialement de l'axe de rotation (22) à la paroi (4a) du boîtier (4) et la seconde partie (10) étant limité en supplément par rapport au tiroir rotatif (20' ; 120) se trouvant dans sa position finale par un élément (28,128) fixe et dépassant en particulier de la paroi (4a) du boîtier (4 ; 40).

14. Dispositif selon la revendication 13,
**caractérisé en ce que** l'élément (28 ; 128) fixe s'étend depuis la paroi (4a) du boîtier (4) sensiblement ou pratiquement radialement par rapport à l'axe de rotation (22).

15. Dispositif selon au moins l'une quelconque des revendications 2 à 14,
**caractérisé en ce que** le tiroir rotatif (20 ; 20' ; 120) est logé de façon pivotante sur le boîtier (4 ; 40).

16. Dispositif selon au moins l'une quelconque des revendications 1 à 15,
**caractérisé en ce que** le tiroir rotatif (20) est pourvu sur la partie (24), qui est disposée à proximité de la surface du liquide lorsque le tiroir rotatif (2) est plongé dans un liquide ou dépasse de cette surface, avec une poignée, conçue en particulier comme une attache.

17. Dispositif selon au moins l'une quelconque des revendications 2 à 15 et selon la revendication 16, avec un couvercle pour la fermeture d'une ouverture prévue en particulier sur le côté supérieur (4c) du boîtier (4),
**caractérisé en ce que** la poignée est fixée directement, de préférence d'un seul tenant, sur le tiroir rotatif et le couvercle présente un percement, par lequel la poignée dépasse vers l'extérieur lorsque le couvercle est posé sur le boîtier de filtre.

18. Dispositif selon au moins l'une quelconque des revendications 2 à 15 et selon la revendication 16, avec un couvercle pour la fermeture d'une ouverture, prévue en particulier sur la surface (4c) du boîtier (4),
**caractérisé en ce que** sur le tiroir rotatif est fixé un manche qui est guidé à travers un trou dans le couvercle et sur l'extrémité libre et extérieure duquel est logée la poignée.

19. Dispositif selon au moins l'une quelconque des revendications 2 à 14 et selon la revendication 16, avec un couvercle (30) pour la fermeture d'une ouverture, prévue en particulier sur le côté supérieur (4c) du boîtier (4 ; 40),
**caractérisé en ce que** le couvercle (30) peut être posé sur le boîtier (4 ; 40) de telle sorte qu'il est logé de façon pivotante sur le boîtier (4 ; 40), et le tiroir rotatif (20' ; 120) est fixé de façon résistante à la torsion sur le côté (30a), tourné vers le boîtier (4 ; 40) du couvercle (30).

20. Dispositif selon la revendication 19,
**caractérisé en ce que** le couvercle (30) forme le pallier pivotant pour le tiroir rotatif (20').

21. Dispositif selon au moins l'une quelconque des revendications 1 à 20,
**caractérisé en ce que** le tiroir rotatif (20 ; 20' ; 120) est réalisé comme un élément en forme de plaque et sensiblement plan.

22. Dispositif selon au moins l'une quelconque des revendications 1 à 21,
**caractérisé par** un dispositif d'entraînement, en particulier pouvant être commandé dans le temps, qui entraîne le tiroir rotatif, afin de transférer les substances aromatiques (T) dans le compartiment qui reçoit les substances aromatiques (T) et est limité par le tiroir rotatif dans sa position finale.
